# EUROPÄISCHE PATENTANMELDUNG

(11) **EP 0 894 769 A2**
(43) Veröffentlichungstag der Anmeldung: **03.02.1999**
(21) Anmeldenummer: 98114406.6
(22) Anmeldetag: 31.07.1998
(51) Int. Cl.: C02F 1/68

(54) **Vorrichtung zum Einbringen von Kohlendioxid in Trinkwasser**

(30) Priorität: 01.08.1997 AT 1307/97
(71) Anmelder: Wintner, Eduard, 6020 Innsbruck (AT)
(72) Erfinder: Wintner, Eduard, 6020 Innsbruck (AT)
(74) Vertreter: Torggler, Paul, Dr.

(57) **Zusammenfassung**

Bei einer Vorrichtung zum Einbringen von Kohlendioxid in Trinkwasser, die einen unter Druck stehenden Gasvorratsbehälter (1) und einen mit Kohlendioxid unter Druck setzbaren Wasserbehälter (4) aufweist sind in der Verbindungsleitung (3) zwischen den beiden Behältern (1, 4) ein Druckbegrenzungsventil (8), ein Rückschlagventil (5) und zwischen diesen beiden eine lösbare Kupplung (6, 7) sowie eine Einrichtung zum Druckabbau (14) vorgesehen.

## Beschreibung

Die Erfindung betrifft eine Vorrichtung zum Einbringen von Kohlendioxid in Trinkwasser, mit einem unter Druck stehenden Gasvorratsbehälter, mit einem mit Kohlendioxid aus dem Vorratsbehälter unter Druck setzbaren Wasserbehälter, der eine verschließbare Füllöffnung und ein Entleerungsventil aufweist, mit einer Verbindungsleitung zwischen dem Gasvorratsbehälter und dem Wasserbehälter, und mit einem in der Verbindungsleitung angeordneten Druckbegrenzungsventil.

Eine derartige Vorrichtung ist beispielsweise der AT 401 597 B zu entnehmen. Deren Druckbegrenzungsventil weist einen im Ventilgehäuse gleitend geführten Ventilkörper auf, an dem hochdruckseitig eine vom einströmenden Kohlendioxid in Öffnungsrichtung beaufschlagbare, kleinere Fläche und niederdruckseitig eine vom eingeströmten Kohlendioxid in Schließrichtung beaufschlagbare größere Fläche vorgesehen sind. Im Gehäuse des Druckbegrenzungsventils ist eine Entlüftungsöffnung vorgesehen, um die ungestörte Bewegung des Ventilkörpers im Gehäuse zu ermöglichen. Eine Gleitdichtung dichtet die Entlüftungsöffnung gegen die Hochdruckseite des Ventilkörpers ab. Die Vorrichtung bewährt sich hervorragend, wenn der Wasserbehälter nicht abnehmbar ist, wobei jeweils nur eine Trinkportion von Sodawasser hergestellt wird, die durch das Entleerungsventil ausgegeben wird.

Für die gleichzeitige Herstellung von mehr als einer Portion von Sodawasser ist es von Vorteil, wenn der Wasserbehälter nicht einen untrennbaren Teil der Karbonisierungsvorrichtung darstellt, sondern nach Art einer Sodawasserflasche nach der Karbonisierung aus der Vorrichtung entnehmbar ist.

Die Erfindung hat es sich nun zur Aufgabe gestellt, eine Vorrichtung der eingangs genannten Art zu schaffen, bei der ein insbesondere mehrere Einzeltrinkportionen umfassender Wasserbehälter nach der Versetzung mit Kohlendioxid aus der Karbonisierungsvorrichtung entnehmbar ist.

Erfindungsgemäß wird dies dadurch erreicht, daß in der Verbindungsleitung ein dem Wasserbehälter zugeordnetes Rückschlagventil, und zwischen dem Druckbegrenzungsventil und dem Rückschlagventil eine Einrichtung zum selbsttätigen Druckabbau sowie eine nach Druckabbau lösbare Kupplung vorgesehen sind. Damit wird, sobald sich der Druck in der Verbindungsleitung abgebaut hat, die Lösung der Kupplung möglich, und der Wasserbehälter kann aus der Karbonisierungsvorrichtung entnommen werden.

Ein mit frischem Wasser, einem Wasser-Fruchtsaftgemisch od. dgl. gefüllter Wasserbehälter wird angekuppelt, und durch Betätigung des Angabeventils des Gasvorratsbehälters strömt Gas durch das Druckbegrenzungsventil, die Verbindungsleitung und das Rückschlagventil in den Wasserbehälter. Dabei baut sich in der Verbindungsleitung und dem Wasserbehälter ein Druck auf, und das Druckbegrenzungsventil sowie das Rückschlagventil werden geschlossen. Der in der Verbindungsleitung verbleibende Druck baut sich ab, und die drucklos gemachte Kupplung kann wieder gelöst werden. Das Druckbegrenzungsventil umfaßt vorzugsweise einen im Ventilgehäuse gleitend geführten Ventilkörper, der eine hochdruckseitige, vom einströmenden Kohlendioxid in Öffnungsrichtung beaufschlagbare, kleinere Fläche und eine niederdruckseitige, vom eingeströmten Kohlendioxid in Schließrichtung beaufschlagbare größere Fläche aufweist, wobei im Ventilgehäuse eine Entlüftungsöffnung und zwischen der Entlüftungsöffnung und der Hochdruckseite des Ventilkörpers eine Gleitdichtung vorgesehen sind.

In einer bevorzugten Ausführung ist vorgesehen, daß die Einrichtung zum Druckabbau durch ein Leck mit geringem Öffnungsquerschnitt gebildet ist. Ein derartiges Leck ermöglicht das Entweichen des in der Verbindungsleitung zwischen den beiden Ventilen eingeschlossenen Kohlendioxides innerhalb einiger Sekunden, und die Vorrichtung wird dadurch leichter bedienbar, da die Betätigung eines denkbaren Entlastungsventiles entfällt. In einer einfachen Ausführung kann das Leck durch ein feines Loch in der Verbindungsleitung gebildet sein. Weiters ist es denkbar, das Leck durch ein undichtes Überdruckventil zu erzielen, das in die Verbindungsleitung zwischen dem Druckbegrenzungsventil und dem Rückschlagventil als Sicherheitsventil eingesetzt ist. Beispielsweise kann das Leck durch nicht übereinstimmende Flächen zwischen dem Ventilsitz und dem Ventilkörper gebildet sein.

In einer weiteren Ausführung kann vorgesehen sein, daß das Druckbegrenzungsventil selbst an der Niederdruckseite undicht ist.

Nachstehend wird nun die Erfindung anhand der Figuren der beiliegenden Zeichnung näher beschrieben, ohne darauf beschränkt zu sein.

Es zeigen:
- Fig. 1: einen schematischen Längsschnitt durch wesentliche Teile einer ersten Ausführung der erfindungsgemäßen Vorrichtung,
- Fig. 2: eine schematische Darstellung der wesentlichen Teile einer zweiten Ausführung der Erfindung,
- Fig. 3: einen Schnitt durch eine erste Ausführung des Druckbegrenzungsventils, und
- Fig. 4: einen Schnitt durch eine zweite Ausführung des Druckbegrenzungsventils.

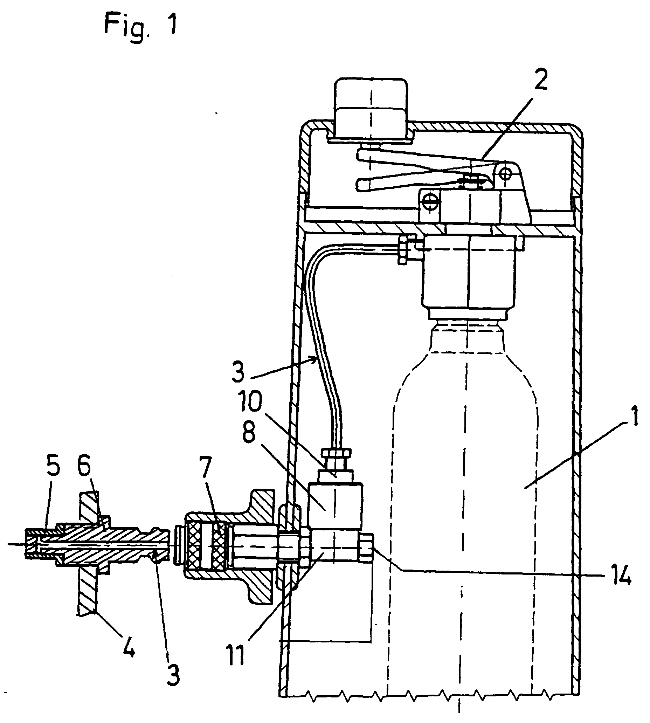

Wesentliche Teile der Vorrichtung zur Einbringung von Kohlendioxid in in einen Wasserbehälter 4 eingefülltes Trinkwasser sind in Fig. 1 dargestellt. Ein Gasvorratsbehälter 1, insbesondere eine austauschbare CO₂-Patrone ist an ein mit einer Betätigungsvorrichtung versehenes Abgabeventil 2 angeschlossen, von dem eine Verbindungsleitung 3 zu den daneben, beispielsweise an einem gemeinsamen Gestell oder Gehäuse angeordneten Wasserbehälter 4 führt. Dieser ist beispielsweise als Sodawasserflasche ausgebildet und weist einen mit einem Rückschlagventil 5 versehenen, im Gestell bzw. Gehäuse fixierten Anschluß für die Verbindungsleitung 3 auf. Der Anschluß umfaßt eine druckfest verriegelbare Kupplung mit einem ersten, dem Wasserbehälter zugeordneten Kupplungsteil 6 und einen der Verbindungsleitung 3 zugeordneten Kupplungsteil 7. Bei Betätigung des Abgabeventils 2 strömt Kohlendioxid in den Wasserbehälter bis zu einem maximal zulässigen Druck von beispielsweise 12 bar ein.

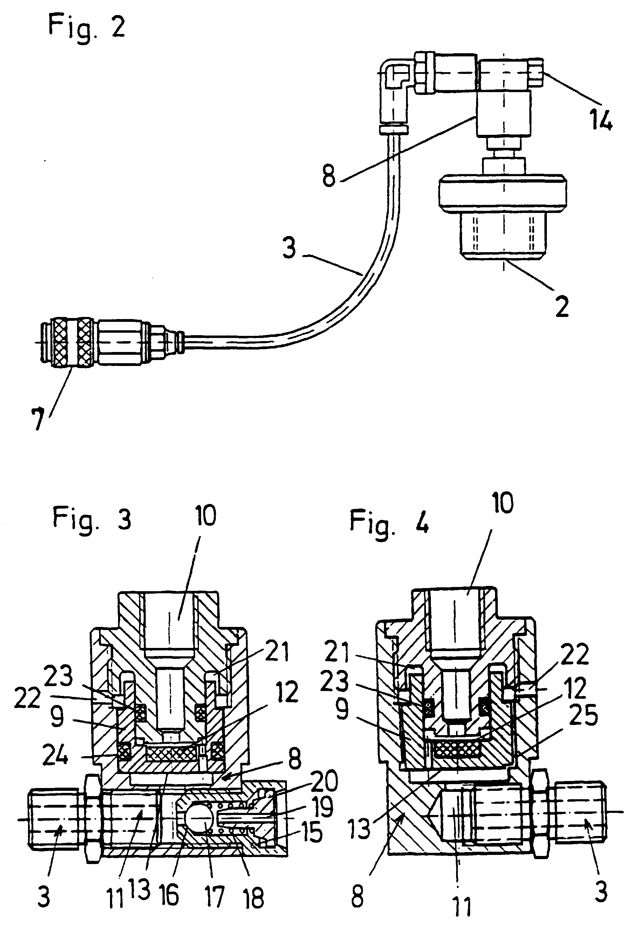

In der Ausführung nach Fig. 2 sind der Gasvorratsbehälter und der Wasserbehälter nicht in einem gemeinsamen Gestell oder Gehäuse vorgesehen, an dessen Oberseite die Betätigungsvorrichtung und das Abgabeventil 2 angeordnet sind, sondern durch eine frei verlegbare Verbindungsleitung 3 verbunden, die an einem Ende eine Montageeinheit, bestehend aus dem Abgabeventil 2 und dem Druckbegrenzungsventil 8, und am anderen Ende den Kupplungsteil 7 aufweist.

In die Verbindungsleitung 3 ist das in Fig. 3 und 4 näher gezeigte Druckbegrenzungsventil 8 eingesetzt, das ein Eingangsrohrstück 10 und ein Ausgangsrohrstück 11 aufweist. Das Druckbegrenzungsventil 8 umfaßt zwei miteinander verschraubte Gehäuseteile, die einen Hohlraum einschließen. Der Hohlraum ist durch einen topfförmigen Ventilkörper 9 in einen Eintrittsraum, in den das Rohrstück 10 führt und einen Austrittsraum, aus dem das Rohrstück 11 führt, unterteilt. Der Topfboden des Ventilkörpers 9 weist eine Innenseite mit einer kleineren Fläche 12 und eine Außenseite mit einer, um die Topfwandung größeren Fläche 13 auf. An der Innenseite des Topfbodens ist eine Dichtscheibe angeordnet, die mit dem inneren Ende des Eingangsrohrstückes 10 als Ventilsitz zusammenwirkt. Der Topfboden weist weitem einen Übertrittskanal zwischen den beiden Räumen auf, und die Topfwandung ist in einer Ringnut 21 gleitend geführt, die eine Entlüftungsöffnung 22 aufweist. Die Entlüftungsöffnung 22 ist in der Ausführung nach Fig. 3 durch die beiden Dichtungen 23, 24 vom Strömungsweg des Kohlendioxids abgetrennt.

Durch das Druckbegrenzungsventil 8 kann nun nach Betätigung des Abgabeventils 2 solange Kohlendioxid in den verschlossenen Wasserbehälter 4 und damit in das enthaltene Trinkwasser einschäumen, bis sich dort ein bestimmter Druck aufgebaut hat, der beispielsweise bei 11 bar liegt. Sobald dieser Druck im Wasserbehälter 4 erreicht ist, wird der Ventilkörper 9 gegen den Ventilsitz gedrückt, da das Kräfteverhältnis aufgrund der Flächendifferenz sich umgekehrt hat. Der Zustrom von Kohlendioxid ist somit unterbrochen, auch wenn das Abgabeventil 2 geöffnet bleibt, wobei die Bewegung des Ventilkörpers ausschließlich durch die Druckänderungen erfolgt. Das Begrenzungsventil enthält daher weder eine Feder noch einen weiteren beweglichen Teil. Nach Unterbrechung des Kohlendioxidstroms schließt auch das Rückschlagventil 5 am Anschluß des Wasserbehälterz 4 spätestens dann, wenn sich der Druck in der Verbindungsleitung 3 verringert. Wenn der Druck abgebaut ist, kann die Kupplung problemlos gelöst werden, sodaß sich besonders im bevorzugten Anwendungsbereich, nämlich in der Sodawasserherstellung im Haushalt, usw. eine einfache Bedienung ergibt.

Der Druckabbau erfolgt aus diesem Grund auch selbsttätig, und es ist zu diesem Zweck eine Einrichtung 14 vorgesehen, die im einfachsten Fall durch ein Loch in der Verbindungsleitung 3 gebildet ist, aus dem das nach Sperre der beiden Ventile 5 und 8 in der Verbindungsleitung 3 eingeschlossene Kohlendioxid innerhalb einiger Sekunden ausströmt. Es wird also bewußt eine undichte Stelle vorgesehen, wobei das Kohlendioxid einerseits so langsam ausströmt, daß die Karbonisierung ohne nennenswerte Druck- bzw. Gasverluste erfolgt, andererseits hingegen so schnell ausströmt, daß der Druckabbau in einer anwenderfreundlichen Zeit erfolgt. Bewährt haben sich Druckabbauzeiten zwischen 5 und 15 Sekunden.

Bevorzugte Ausführungen der Druckabbaueinrichtung 14 sind in Fig. 3 und 4 gezeigt, die jeweils einen Schnitt durch ein Druckbegrenzungsventil darstellen. In Fig. 3 ist das den Gasaustrittsraum umfassende Rohrstück 11 quer zum zuführenden Rohrstück 10 angeordnet, wobei an der in der Zeichnung linken Seite die Verbindungsleitung 3 zum Kupplungsteil 6 weitergeführt (Fig. 1) und an der rechten Seite ein Überdruckventil 15 eingesetzt ist, dessen Ventilkörper 17 im Ventilsitz 16 nicht abdichtet. Die die Ventilfeder 18 beaufschlagende Schraube 20 weist eine Axialbohrung 19 auf, durch die das den undichten Ventilkörper 17 passierende Kohlendioxid aus der Kupplung 6, 7 entweichen kann.

Fig. 4 zeigt eine Ausführung, in der das Leck direkt im Druckbegrenzungsventil 8 dadurch vorgesehen ist, daß die niederdruckseitige Dichtung 24 der Fig. 3 nicht vorhanden ist. Das Leck ist daher durch den Gleitspalt 25 zwischen dem Ventilkörper 9 und der Gehäusewand gebildet.

## Patentansprüche

1. Vorrichtung zum Einbringen von Kohlendioxid in Trinkwasser, mit einem unter Druck stehenden Gasvorratsbehälter, mit einem mit Kohlendioxid aus dem Vorratsbehälter unter Druck setzbaren Wasserbehälter, der eine verschließbare Füllöffnung und ein Entleerungsventil aufweist, mit einer Verbindungsleitung zwischen dem Gasvorratsbehälter und dem Wasserbehälter, und mit einem in der Verbindungsleitung angeordneten Druckbegrenzungsventil, dadurch gekennzeichnet, daß in der Verbindungsleitung (3) ein dem Wasserbehälter (4) zugeordnetes Rückschlagventil (5), und zwischen dem Druckbegrenzungsventil (8) und dem Rückschlagventil (5) eine Einrichtung zum selbsttätigen Druckabbau (14) sowie eine nach Druckabbau lösbare Kupplung (6, 7) vorgesehen sind.

2. Vorrichtung nach Anspruch 1, dadurch gekennzeichnet, daß die Einrichtung zum Druckabbau (14) durch ein Leck mit geringem Öffnungsquerschnitt gebildet ist.

3. Vorrichtung nach Anspruch 2, dadurch gekennzeichnet, daß das Leck als Loch in der Verbindungsleitung (3) ausgebildet ist.

4. Vorrichtung nach Anspruch 2, dadurch gekennzeichnet, daß das Leck in einem Überdruckventil (15) ausgebildet ist.

5. Vorrichtung nach Anspruch 2, in der das Druckbegrenzungsventil (8) einen im Ventilgehäuse gleitend geführten Ventilkörper (9) aufweist, der eine hochdruckseitige, vom einströmenden Kohlendioxid in Öffnungsrichtung beaufschlagbare, kleinere Fläche (12) und eine niederdruckseitige, vom eingeströmten Kohlendioxid in Schließrichtung beaufschlagbare größere Fläche (13) aufweist, wobei im Ventilgehäuse eine Entlüftungsöffnung (22) und zwischen der Entlüftungsöffnung (22) und der Hochdruckseite des Ventilkörpers (9) eine Gleitdichtung (23) vorgesehen sind, dadurch gekennzeichnet, daß das Leck durch den Gleitspalt zwischen der Entlüftungsöffnung (22) und der Niederdruckseite des Ventilkörpers (9) gebildet ist.
